# EUROPÄISCHE PATENTSCHRIFT

(11) **EP 3 714 535 B1**
(45) Veröffentlichungstag und Bekanntmachung des Hinweises auf die Patenterteilung: **05.05.2021**
(21) Anmeldenummer: 18815536.0
(22) Anmeldetag: 23.11.2018
(51) Int. Cl.: H02K 15/12, H02K 16/00, H02P 29/024, H02P 29/66

(54) **ELEKTRISCHE MASCHINE MIT ERHÖHTER BETRIEBSSICHERHEIT**
ELECTRIC MACHINE HAVING INCREASED OPERATIONAL SAFETY
MACHINE ÉLECTRIQUE AVEC SÉCURITÉ DE FONCTIONNEMENT AMÉLIORÉE

(30) Priorität: 23.11.2017 DE 102017220941
(43) Veröffentlichungstag der Anmeldung: 30.09.2020
(73) Patentinhaber: Rolls-Royce Deutschland Ltd & Co KG, 15827 Blankenfelde-Mahlow (DE)
(72) Erfinder: HOUSHMAND, Behnam, 15827 Blankenfelde-Mahlow (DE); LOESCH, Christian, 15827 Blankenfelde-Mahlow (DE); SONS, Markus, 15827 Blankenfelde-Mahlow (DE)
(86) Internationale Anmeldenummer: PCT/EP2018/082359
(87) Internationale Veröffentlichungsnummer: WO 2019/101915

(56) Entgegenhaltungen:
- EP-A2- 2 372 901
- US-A1- 2014 054 986
- US-A1- 2015 115 757
- US-A1- 2017 190 435

## Beschreibung

Die Erfindung betrifft eine vorzugsweise redundante elektrische Maschine mit erhöhter Betriebssicherheit, welche bspw. zum Antreiben eines Vortriebsmittels einsetzbar ist.

Anwendungen von elektrischen Maschinen umfassend insbesondere Elektromotoren und Generatoren erfordern vielmals eine erhöhte Sicherheit sowie Zuverlässigkeit gegen einen Ausfall der Maschine. Insbesondere muss weitestgehend sichergestellt sein, dass ein Ausfall der Maschine nicht zusätzlich zum mit dem Ausfall einhergehenden Verlust des Antriebs zu einer starken Überhitzung bzw. zum Brand führt. Besonders bei Luftfahrtanwendungen kann ein Brand sehr schnell zu einer großen Gefahr werden.

Bei elektrischen Maschinen können bspw. aufgrund nicht festgestellter bzw. nicht feststellbarer Material- oder Fertigungsfehler sowie auch im Falle von betrieblichen Überlastungen wie bspw. durch Spannungs- und/oder Stromspitzen die Isolationen des Statorwicklungssystems der Maschine versagen. Derartige Fehlerfälle können bspw. dann eintreten, wenn im Statorwicklungssystem ein Windungsschluss, ein Wicklungsschluss oder ein Masseschluss auftritt. Ein solches Versagen verursacht im weiteren Schadensverlauf einen Funktionsausfall und im schlimmsten Fall einen Brand der elektrischen Maschine.

Eine derartige Entwicklung stellt grundsätzlich eine Risikosituation dar, da es zumindest zu einem Ausfall und ggf. zu einer Beschädigung der Maschine kommt, was je nach Anwendung der Maschine mehr oder weniger schwerwiegende Konsequenzen haben kann. Insbesondere im Falle einer Anwendung der elektrischen Maschine als Teil des Antriebssystems eines elektrisch oder hybrid-elektrisch angetriebenen Luftfahrzeugs kann der Ausfall der elektrischen Maschine fatale Folgen haben.

Dementsprechend müssen in der Luftfahrt eingesetzte Komponenten bzw. Systeme eine ausreichende Ausfallsicherheit aufweisen.

Um die Ausfallwahrscheinlichkeit zu senken bzw. die Ausfallsicherheit zu verbessern, werden elektrische Maschinen für die Anwendung in Luftfahrzeugantrieben meist redundant konzipiert, so dass der Ausfall eines Teilsystems des Antriebs nicht zum Ausfall des gesamten Antriebssystems und zu einem Absturz des Luftfahrzeugs führt. Die Redundanz kann durch eine Mehrfachauslegung, bspw. eine Verdopplung, eines kompletten Antriebsstranges erreicht werden, d.h. durch Vorsehen von mehreren Propellern inklusive der entsprechenden Motoren, oder aber durch Erhöhung der Redundanz von Komponenten mit erhöhter Ausfallwahrscheinlichkeit. Im letzteren Fall kann bspw. einem Propeller ein Motor mit mehreren Wicklungssystemen und dementsprechend mehreren Spannungsquellen nebst jeweiliger Leistungselektroniken vorgeschaltet werden oder dem Propeller sind mehrere Motoren mit mehreren Leistungselektroniken zugeordnet, wobei die Motoren auf derselben Welle angeordnet sind. Eine komplette Redundanz aller Komponenten führt generell zu einem deutlich erhöhten Platz- und Kostenaufwand für den Antriebsstrang, weshalb angestrebt wird, die Redundanz auf bestimmte Komponenten zu verteilen.

Bei einem Elektromotor mit bspw. zwei Wicklungssystemen kann dieser bei einem Ausfall einer der zwei Leistungselektroniken im Normalfall -wenn auch eingeschränkt- weiterbetrieben werden. Insbesondere im Fall eines permanenterregten Motors gilt jedoch, dass im Fehlerfall, bspw. bei einem Windungsschluss, einem Phasenschluss oder einem anderem Kurzschluss, die entsprechende Fehlerstelle weiterhin mit dem Magnetkreis gekoppelt ist und der mit den Permanentmagneten drehende Rotor eine Spannung im fehlerhaften Wicklungssystem induziert. Die induzierte Spannung treibt aufgrund des Kurzschlusses einen typischerweise sehr hohen Fehlerstrom, der zu einer starken Überhitzung der Maschine bis hin zum Brand führen kann. Zwar würde diese Problematik bei elektrisch erregten Synchron- oder auch Asynchronmaschinen nicht auftreten, da bei diesen die Erregung durch den Rotor direkt steuerbar und damit konsequenterweise abschaltbar ist. Diese Maschinentypen liefern jedoch eine deutlich niedrigere Leistungsdichte (kW/kg) und sind daher für die Luftfahrt weniger interessant, weswegen in dem hier betrachteten Umfeld von einer permanenterregten Maschine ausgegangen wird.

Aufgrund der Permanentmagneterregung kann die Maschine also nicht einfach abgeschaltet werden, wie dies bspw. bei einer elektrisch erregten Maschine der Fall wäre. Eine Redundanz durch die zwei oder auch mehr Wicklungssysteme ist in dem genannten Fehlerfall ebenfalls nicht mehr gegeben. Darüber hinaus kann sich ein Fehler sogar auf das benachbarte Wicklungssystem übertragen. Befinden sich die zwei Wicklungssysteme auf demselben Umfang, jedes System bspw. jeweils in einer Halbschale, kann sich ein Fehler in einem Wicklungssystem auch auf das zweite Wicklungssystem fortsetzen. Ein weiteres Problem bei einem derartigen redundanten System liegt in einem als "Windmilling" bezeichneten Effekt, bei dem im Flug auch beim Ausschalten des fehlerhaften Antriebsstranges der Propeller den Läufer weiterdrehen wird und dadurch weiterhin ein induzierter Fehlerstrom fließen wird. Das Problem des Windmillings kann zwar bspw. durch das Vorsehen einer mechanischen Bremse gelöst werden, dieser Ansatz führt aber zu einer erhöhten Komplexität und Masse des kompletten Antriebsstranges.

In der EP2896532A1 wird aus Sicherheitsgründen, wie oben bereits angedeutet, eine Redundanz mit Hilfe zweier Statorwicklungssysteme erreicht, wobei für jedes der beiden Wicklungssysteme eine eigene Spannungsquelle vorgesehen ist. Die beiden getrennten Wicklungssysteme arbeiten mit nur einem permanentmagnetbestückten Läufer zusammen. Wird in einem der beiden Wicklungssysteme oder in einer der beiden Spannungsquellen ein Fehler erkannt, bspw. eine Übertemperatur, eine Überspannung oder ein Überstrom, so wird eine Deaktivierung des fehlerhaften Wicklungssystems bzw. der fehlerhaften Spannungsquelle über eine Abschaltung der zugehörigen Spannungsquelle ausgelöst, während das zweite Wicklungssystem regulär weiter betrieben werden kann.

Das beschriebene, redundante System erlaubt zwar ein Fortführen des Betriebs, es ist jedoch nicht grundsätzlich auszuschließen, dass das fehlerhafte Wicklungssystem weiterhin von einem elektrischen Strom durchflossen wird, was zu einer Überhitzung der Maschine führen kann. Eine Quelle eines solchen Stromflusses kann zum Einen die eigentliche, das Statorwicklungssystem regulär versorgende Stromquelle sein. Diese kann und muss konsequenterweise bei Feststellung eines Fehlerfalles unmittelbar abgeschaltet werden. Zusätzlich und insbesondere sind jedoch auch die aufgrund der weiterhin vorhandenen Rotation des Motorläufers bzgl. des fehlerhaften Statorwicklungssystems in diesem Wicklungssystem induzierten Ströme zu berücksichtigen, die insbesondere bei permanenterregten elektrischen Maschinen auftreten. Aufgrund der damit zusammenhängenden Brandgefahr muss daher das gefährliche Überhitzen unmittelbar nach Detektion des Fehlers durch eine sichere Unterbrechung dieses den Schadensfortschritt begünstigenden Stromflusses im Wicklungssystem verhindert werden.

Bei derartigen sicherheitskritischen Systemen muss also im Falle eines Fehlers, bspw. bei einem Kurzschluss im Statorwicklungssystem, in der elektrischen Maschine ein sicheres Abschalten möglich sein. Wenn der dem fehlerhaften Statorwicklungssystem zugeordnete bzw. mit diesem elektromagnetisch wechselwirkende Läufer wie oben beschrieben durch externe Einflüsse weitergedreht wird, bspw. durch einen Propeller oder wie in EP2896532A1 durch eine weitere elektrische Maschinen im gleichen mechanischen Strang, wird weiterhin durch den mit Permanentmagneten bestückten Läufer Leistung in das fehlerhafte Wicklungssystem induziert. Dies kann wie erwähnt zu einem Brand der Maschine führen und somit die Sicherheit gefährden. Um dies zu verhindern würde sich also konsequenterweise die Notwendigkeit ergeben, den kompletten Strang abzuschalten bzw. zu stoppen, womit jedoch die angestrebte Redundanz hinfällig wird.

In der DE102016221304 wird eine redundante elektrische Maschine beschrieben, mit der diese Problematik adressiert wird. Die dort vorgestellte Maschine weist zwei Teilsysteme auf, die jeweils einen Läufer und ein Statorwicklungssystem umfassen. Die Läufer sitzen auf einer gemeinsamen Welle und treiben über diese Welle einen Propeller an. Bei einem Fehlerfall in einem der Wicklungssysteme soll unterbunden werden, dass der zugehörige Läufer weiter rotiert, um einen Induktion von Leistung in das fehlerhafte Wicklungssystem auszuschließen. Dies wird durch die Verwendung von Freiläufen erreicht, die derart zwischen jeweiligem Läufer und der Welle angeordnet sind, dass im Fehlerfall der Läufer eines defekten Teilsystems der Maschine nicht weiter von einer gemeinsamen Welle angetrieben wird. Dies löst zwar das beschriebene Problem, jedoch sind Freiläufe und mit ihnen auch das Gesamtsystem vergleichsweise anfällig und die elektrischen Maschinen können in der vorgestellten Konfiguration nur als Motor, nicht aber als Generator betrieben werden. Der Betriebsmodus als Generator wird aber u.a. zur schnellen Drehzahlregelung, bspw. für Quadrocopter oder VTOL-Flugzeuge, und zur Rekuperation benötigt.

Die DE102017209174 beschreibt ebenso ein redundantes System mit einer Vielzahl von Teilsystemen mit jeweils einem Rotor und einem Stator. Im Fehlerfall wird hier dafür gesorgt, dass der jeweilige Luftspalt zwischen einander zugeordnetem Rotor und Stator vergrößert wird, so dass die elektromagnetische Wechselwirkung stark reduziert und damit die Induktion unterbunden wird. Auch hierdurch wird das einleitend erwähnte Problem gelöst, doch ist das Gesamtsystem vergleichsweise aufwändig und schwer.

Die EP2372901 A2 beschreibt eine elektrische Maschine, die eine Entmagnetisierungseinrichtung aufweist. In der US2017/190435 A1 wird eine redundante elektrische Maschine beschrieben.

Es ist daher eine Aufgabe der vorliegenden Erfindung, eine Möglichkeit zur Verbesserung einer Ausfallsicherheit einer elektrischen Maschine anzugeben.

Diese Aufgabe wird durch die in den unabhängigen Ansprüchen beschriebenen Gegenständen gelöst. Die Unteransprüche beschreiben vorteilhafte Ausgestaltungen.

Das zugrunde liegende Konzept besteht im Wesentlichen darin, dass im Falle eines Fehlers in einem Statorwicklungssystem die magnetischen Mittel des dem Statorwicklungssystem zugeordneten Rotors, d.h. die Permanentmagnete des Rotors, der mit dem fehlerhaften Statorwicklungssystem elektromagnetisch wechselwirkt, absichtlich und kontrolliert entmagnetisiert werden, um damit die elektromagnetische Wechselwirkung zu unterbinden und konsequenterweise die Induktion von Spannungen im fehlerhaften Statorwicklungssystem auszuschließen. Hierzu kann bspw. der physikalische Effekt ausgenutzt werden, dass die Magnetisierung von Permanentmagneten ab einer bestimmten Temperatur nicht mehr stabil ist. Alternativ oder zusätzlich kann die Magnetisierung der Permanentmagnete durch Anwendung eines entsprechend starken Gegenfeldes reduziert werden. Um diese beiden Ansätze zu realisieren sind verschiedene Ausführungsformen denkbar.

Eine Elektrische Maschine, welche unter Ausnutzung einer elektromagnetischen Wechselwirkung als elektrischer Generator zum Bereitstellen einer elektrischen Spannung oder als Elektromotor zum Antreiben eines Vortriebsmittels konfigurierbar ist, weist ein Statorsystem mit einer Wicklungssystemgruppe umfassend zumindest zwei Statorwicklungssysteme sowie eine Rotoranordnung mit zumindest zwei Rotoren auf. Dabei umfasst jeder Rotor der Rotoranordnung zumindest einen Permanentmagneten als magnetisches Mittel. Desweiteren gilt, dass jeder Rotor der Rotoranordnung einem Statorwicklungssystem der Wicklungssystemgruppe zugeordnet und gegenüber dem ihm zugeordneten Statorwicklungssystem rotierbar ist und dass jedes Statorwicklungssystem der Wicklungssystemgruppe und der dem jeweiligen Statorwicklungssystem zugeordnete Rotor der Rotoranordnung derart ausgebildet und einen jeweiligen Luftspalt zwischen sich bildend zueinander angeordnet sind, dass sie, d.h. insbesondere die magnetischen Mittel und die Statorwicklungssysteme, elektromagnetisch miteinander wechselwirken können. Insbesondere weist die elektrische Maschine eine Entmagnetisierungseinrichtung auf, mit der insbesondere bei Vorliegen eines Fehlerfalls in einem fehlerhaften Statorwicklungssystem der Wicklungssystemgruppe eine gezielte Entmagnetisierung des magnetischen Mittels des dem fehlerhaften Statorwicklungssystem zugeordneten Rotors durchführbar ist.

Die Entmagnetisierungseinrichtung weist eine Heizvorrichtung auf. Die Heizvorrichtung umfasst für jeden Rotor der Rotoranordnung eine dem jeweiligen Rotor zugeordnete Aufheizeinrichtung, wobei jede Aufheizeinrichtung durch die Entmagnetisierungseinrichtung separat aktivierbar und deaktivierbar sowie eingerichtet und angeordnet ist, um nach Aktivierung lediglich denjenigen Rotor und insbesondere dessen magnetisches Mittel separat aufzuheizen, dem sie zugeordnet ist. Die Entmagnetisierungseinrichtung ist eingerichtet, um bei Bedarf, insbesondere im Fehlerfall, und gezielt jede Aufheizeinrichtung separat aktivieren zu können, wobei nach einer Aktivierung einer jeweiligen Aufheizeinrichtung nur derjenige Rotor, dem die aktivierte Aufheizeinrichtung zugeordnet ist, und insbesondere dessen magnetisches Mittel aufgeheizt wird.

Die Heizvorrichtung umfasst eine konfigurierbare Fluidverbindung zu einer Wärmequelle, wobei über die Fluidverbindung Wärme von der Wärmequelle bspw. in Form von heißen Gasen zur elektrischen Maschine führbar ist. Die Fluidverbindung weist für jeden Rotor der Rotoranordnung eine dem jeweiligen Rotor zugeordnete Leitung zum Führen der Wärme ist, bspw. mit Hilfe entsprechend angeordneter und einzeln einstellbarer Ventile.

Die Wärmequelle kann bspw. eine Einrichtung zur Erzeugung von heißer Luft umfassen, wobei die erzeugte heiße Luft die zur elektrischen Maschine führbare Wärme darstellt.

Die Entmagnetisierung kann bspw. mit Hilfe einer gezielten Überhitzung der Permanentmagnete erfolgen, da eine Überhitzung der Magnete dazu führt, dass deren Magnetisierung instabil wird und zusammenbricht.

Vorteilhafterweise weist die Rotoranordnung eine Vielzahl von Rotoren auf, welche drehfest mit einer gemeinsamen Welle verbunden sind, wobei die Welle für den Fall, dass die elektrische Maschine als elektrischer Generator konfiguriert ist, mit einem Antriebsmittel zum Antreiben der Welle verbunden ist und für den Fall, dass die elektrische Maschine als Elektromotor konfiguriert ist, mit dem anzutreibenden Vortriebsmittel verbunden ist. Die Entmagnetisierungseinrichtung ist ausgebildet, um für jeden Rotor separat eine Entmagnetisierung des magnetischen Mittels des jeweiligen Rotors derart durchführen zu können, dass insbesondere im Fehlerfall lediglich das magnetische Mittel desjenigen Rotors entmagnetisiert wird, welcher dem fehlerhaften Statorwicklungssystem zugeordnet ist. Gleichzeitig würde also ein magnetisches Mittel eines Rotors, der einem nicht fehlerhaften Statorwicklungssystem zugeordnet ist, nicht entmagnetisiert werden, so dass der Betrieb der elektrischen Maschine aufrechterhalten werden kann.

In einer Ausführungsform ist eine Rotorkühlung zur Kühlung der Rotoranordnung zumindest im Betrieb der elektrischen Maschine vorgesehen, wobei die Rotorkühlung für jeden Rotor der Rotoranordnung ein dem jeweiligen Rotor zugeordnetes Kühlsystem aufweist. Jedes Kühlsystem ist separat aktivierbar und deaktivierbar sowie eingerichtet und angeordnet, um nach Aktivierung lediglich denjenigen Rotor und insbesondere dessen magnetisches Mittel separat zu kühlen, dem es zugeordnet ist. Die Entmagnetisierungseinrichtung ist eingerichtet, um bei Bedarf, insbesondere im Fehlerfall, und gezielt jedes Kühlsystem separat deaktivieren zu können, wobei nach einer Deaktivierung eines jeweiligen Kühlsystems derjenige Rotor, dem das deaktivierte Kühlsystem zugeordnet ist, und insbesondere dessen magnetisches Mittel nicht weiter gekühlt wird.

Diese Rotorkühlung kann bspw. ein fluides Kühlmedium umfassen, wobei die Rotorkühlung eine Einrichtung zur Regelung eines Flusses des Kühlmediums zu einem jeweiligen Kühlsystem aufweist, welche bspw. mit Hilfe von entsprechend angeordneten und eingerichteten Ventilen derart durch die Entmagnetisierungseinrichtung konfiguriert werden kann, dass für den Fall, dass ein jeweiliges Kühlsystem aktiviert ist, das Kühlmedium in das jeweilige Kühlsystem strömt, mit der Folge, dass der jeweilige Rotor sowie insbesondere sein magnetisches Mittel gekühlt werden, und für den Fall, dass das jeweilige Kühlsystem deaktiviert ist, ein Strömen des Kühlmediums in das jeweilige Kühlsystem verhindert wird, mit der Folge, dass der jeweilige Rotor sowie sein magnetisches Mittel nicht gekühlt werden und sich dementsprechend aufheizen, was letztlich bewirkt, dass das magnetische Mittel entmagnetisiert wird.

In einer anderen Ausführungsform ist die Entmagnetisierungseinrichtung eingerichtet, um bei Vorliegen des Fehlerfalls dem fehlerhaften Statorwicklungssystem einen Wechselstrom mit einem gezielt aufgeprägten Oberschwingungsanteil zuzuführen. Das Vorhandensein der Oberschwingungen führt letztlich zur im Fehlerfall angestrebten Erhitzung des jeweiligen magnetischen Mittels.

Hierzu kann für jedes Statorwicklungssystem eine dem jeweiligen Statorwicklungssystem zugeordnete Leistungselektronikeinheit vorgesehen sein, wobei jede Leistungselektronikeinheit eingerichtet ist, um dem Statorwicklungssystem, dem sie zugeordnet ist, im Normalbetrieb, d.h. wenn kein Fehlerfall vorliegt, des jeweiligen Statorwicklungssystems einen zum Betrieb des jeweiligen Statorwicklungssystems geeigneten Wechselstrom bereitzustellen und zuzuführen. Die Entmagnetisierungseinrichtung ist nun eingerichtet, um die Leistungselektronikbaugruppe derart zu betreiben, dass bei Vorliegen des Fehlerfalls die dem fehlerhaften Statorwicklungssystem zugeordnete Leistungselektronikeinheit dem dem fehlerhaften Statorwicklungssystem zuzuführende Wechselstrom gezielt einen Oberschwingungsanteil aufprägt.

Es kann also durch Verwendung der ohnehin vorhandenen Komponenten der elektrischen Maschine eine Entmagnetisierung durchgeführt werden.

In einer weiteren Ausführung ist eine Vorrichtung zur Erzeugung magnetischer Gegenfelder vorgesehen. Die Vorrichtung zur Erzeugung magnetischer Gegenfelder weist für jeden Rotor der Rotoranordnung eine dem jeweiligen Rotor zugeordnete Einheit zur Erzeugung eines magnetischen Gegenfeldes auf, wobei jede derartige Einheit separat aktivierbar sowie angeordnet und ausgebildet ist, um nach Aktivierung durch Einspeisen eines elektrischen Stroms in das fehlerhafte Statorwicklungssystem ein magnetisches Gegenfeld zu erzeugen, welches im Wesentlichen auf den der Einheit zugeordneten Rotor wirkt und dabei dessen magnetisches Mittel entmagnetisiert. Das jeweilige magnetische Gegenfeld soll dabei auf den jeweils anderen Rotor idealerweise keine Wirkung haben bzw. höchstens eine minimale Wirkung, die die Funktionsfähigkeit des anderen Rotors nicht wesentliche beeinträchtigt. Die Entmagnetisierungseinrichtung ist nun eingerichtet, um die Vorrichtung zur Erzeugung magnetischer Gegenfelder derart zu betreiben, dass bei Vorliegen des Fehlerfalls die dem fehlerhaften Statorwicklungssystem zugeordnete Einheit zur Erzeugung eines jeweiligen magnetischen Gegenfeldes gezielt und separat aktivieren zu können.

Jede Einheit zur Erzeugung eines jeweiligen magnetischen Gegenfeldes ist also ausgebildet, um in das Statorwicklungssystem, dem die jeweilige Einheit zugeordnet ist, einen elektrischen Strom einzuspeisen, der die Erzeugung des jeweiligen magnetischen Gegenfeldes bewirkt. In diesem Fall können die Einheiten zur Erzeugung der Gegenfelder bspw. in Form der zum Betrieb der elektrischen Maschine typischerweise benötigten Leistungselektronik realisiert sein.

Alternativ oder zusätzlich kann die Vorrichtung zur Erzeugung magnetischer Gegenfelder zur Entmagnetisierung als Kurzschließvorrichtung ausgebildet sein, mit der zumindest eine Phase des fehlerhaften Statorwicklungssystems kurzschließbar ist. Die Entmagnetisierungseinrichtung ist in diesem Fall eingerichtet, um die Kurzschließvorrichtung derart zu betreiben, dass bei Vorliegen des Fehlerfalls zumindest eine Phase des fehlerhaften Statorwicklungssystems kurzgeschlossen wird. Das aufgrund dessen bei weiterhin drehendem Rotor und damit in der kurzgeschlossenen Leitung bewirktem induzierten Strom aufgebaute magnetische Feld wirkt dem Magnetfeld der Permanentmagnete entgegen und resultiert in einer Entmagnetisierung.

Bspw. im Anwendungsfall der elektrischen Maschine in einem hybrid-elektrisch angetriebenen Fahrzeug, bspw. einem Luftfahrzeug, kann die Wärmequelle eine Verbrennungskraftmaschine, insbesondere eine Turbine, und die dem dem fehlerhaften Statorwicklungssystem zugeordneten Rotor zugeführte Wärme eine Abwärme dieser Verbrennungskraftmaschine, insbesondere Zapfluft, sein.

Jede der Leitungen ist vorzugsweise derart angeordnet und ausgebildet, dass die über die jeweilige Leitung zugeführte Wärme in den Luftspalt desjenigen Rotors geführt wird, dem die Leitung zugeordnet ist. Hiermit kann die Wärme direkt auf die Permanentmagnete wirken und somit die maximal mögliche Erhitzung erzielen.

Alternativ oder zusätzlich kann jede Aufheizeinrichtung zumindest ein von der Entmagnetisierungseinrichtung aktivierbares elektrisches Heizelement zum Aufheizen desjenigen Rotors aufweisen, dem die jeweilige Aufheizeinrichtung zugeordnet ist. Die Entmagnetisierungseinrichtung ist dann eingerichtet, um bei Bedarf, insbesondere im Fehlerfall, und gezielt jedes elektrische Heizelement separat aktivieren zu können, wobei nach einer Aktivierung eines jeweiligen elektrischen Heizelementes nur derjenige Rotor, dem das aktivierte elektrische Heizelement zugeordnet ist, und insbesondere dessen magnetisches Mittel aufgeheizt wird. Das zumindest eine elektrische Heizelement kann bspw. über einen Schleifring oder induktiv mit einer äußeren Energiequelle zur Versorgung des Heizelementes verbunden sein.

In einem Verfahren zum Betreiben einer derartigen elektrischen Maschine führt die Entmagnetisierungseinrichtung also bei Vorliegen des Fehlerfalls im fehlerhaften Statorwicklungssystem eine Entmagnetisierung der magnetischen Mittel des dem fehlerhaften Statorwicklungssystem zugeordneten Rotors aus.

Zur Entmagnetisierung wird eine Überhitzung des dem fehlerhaften Statorwicklungssystem zugeordneten Rotors und insbesondere eine Überhitzung der magnetischen Mittel des dem fehlerhaften Statorwicklungssystem zugeordneten Rotors herbeigeführt.

Vorteilhafterweise wird nach dem Herbeiführen der Überhitzung ein dem ursprünglichen Magnetfeld des magnetischen Mittels des dem fehlerhaften Statorwicklungssystem zugeordneten Rotors entgegen gerichtetes magnetisches Gegenfeld aufgebaut, um die Entmagnetisierung des betroffenen magnetischen Mittels zu maximieren.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Desweiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigt:
- FIG 1: eine permanenterregte elektrische Maschine nach dem Stand der Technik,
- FIG 2: eine Prinzipdarstellung einer redundanten elektrischen Maschine zur Veranschaulichung des hier zum Einsatz kommenden Konzept,
- FIG 3: eine erste Ausführungsform der erfindungsgemäßen elektrischen Maschine mit Entmagnetisierungseinrichtung,
- FIG 4: eine zweite Ausführungsform der elektrischen Maschine mit Entmagnetisierungseinrichtung,
- FIG 5: eine dritte Ausführungsform der elektrischen Maschine mit Entmagnetisierungseinrichtung,
- FIG 6: eine Leistungselektronikeinheit,
- FIG 7: eine erste Variante einer fünften Ausführungsform der elektrischen Maschine mit Entmagnetisierungseinrichtung,
- FIG 8: eine zweite Variante der fünften Ausführungsform der elektrischen Maschine mit Entmagnetisierungseinrichtung.

Es sei angemerkt, dass sich Begriffe wie "axial", "radial", "tangential" bzw. "in Umfangsrichtung" etc. auf die in der jeweiligen Figur bzw. im jeweils beschriebenen Beispiel zum Einsatz kommende Welle bzw. Achse beziehen. Mit anderen Worten beziehen sich die Richtungen axial, radial, tangential stets auf eine Drehachse des Rotors. Dabei beschreibt "axial" eine Richtung parallel zur Rotationsachse, "radial" beschreibt eine Richtung orthogonal zur Rotationsachse, auf diese zu oder auch von ihr weg, und "tangential" ist eine Bewegung bzw. Richtung orthogonal zur Achse sowie orthogonal zur radialen Richtung, die also in konstantem radialen Abstand zur Rotationsachse und bei konstanter Axialposition kreisförmig um die Rotationsachse herum gerichtet ist.

Mit dem Begriff "elektromagnetische Wechselwirkung" ist die bei einer elektrischen Maschine bekannte Wechselwirkung zwischen den Magnetfeldern der magnetischen Mittel des Rotors, bspw. Permanentmagnete, und den magnetischen Mitteln des Stators, bspw. stromdurchflossene Spulen, gemeint, aufgrund derer der Elektromotor sein Drehmoment entwickelt bzw. aufgrund derer ein Generator einen elektrischen Strom liefert.

Eine "drehfeste" Verbindung zweier Komponenten, bspw. eines Rotors mit einer Welle, soll sich dadurch auszeichnen, dass sich eine Rotation einer der Komponenten grundsätzlich auf die andere Komponente überträgt. Gleiches gilt für den Fall, dass eine der Komponenten abgebremst wird. In diesem Fall wird aufgrund der drehfesten Verbindung auch die jeweils andere Komponente gebremst. Es kann davon ausgegangen werden, dass die Rotationsfrequenzen bzw. Drehzahlen zweier drehfest miteinander verbundener Komponenten stets identisch sind.

Eine Komponente, bspw. ein Statorwicklungssystem, in der ein Fehlerfall eintritt, wird im Folgenden konsequenterweise als "fehlerhafte Komponente" bezeichnet, bspw. kann also von einem fehlerhaften Statorwicklungssystem die Rede sein.

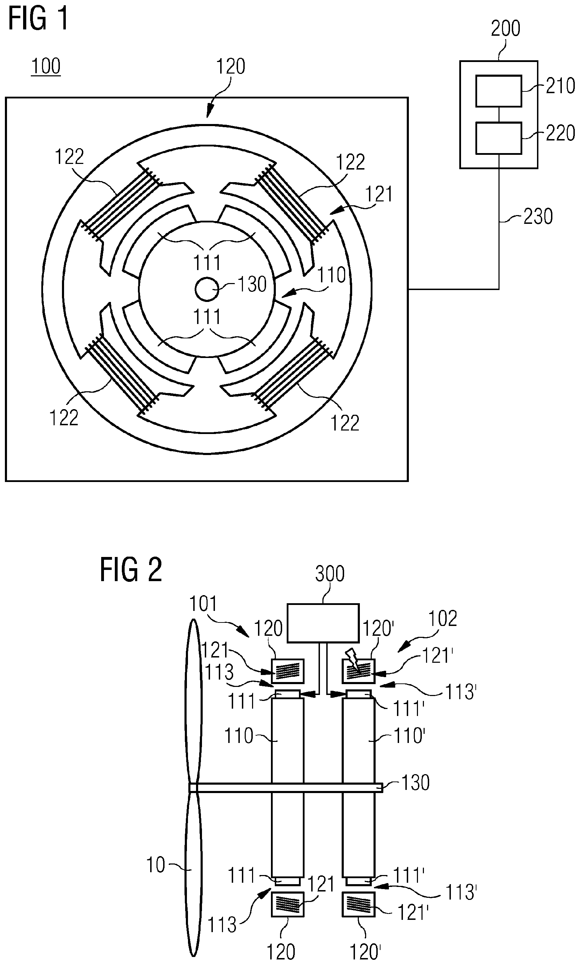

Die FIG 1 zeigt exemplarisch eine als Elektromotor ausgebildete elektrische Maschine 100. Es sei erwähnt, dass die elektrische Maschine 100 in ähnlichem Aufbau grundsätzlich auch als Generator betrieben werden kann. Weiterhin sei angemerkt, dass der Aufbau der im Folgenden beschriebenen Maschine stark vereinfacht ist und insbesondere die im Zusammenhang mit den weiteren Figuren erläuterten Details nicht zeigt, sondern lediglich zur Veranschaulichung der Funktionsweise des Elektromotors dient. Es kann als bekannt vorausgesetzt werden, dass je nach Ausbildung der elektrischen Maschine als Generator oder als Elektromotor und/oder als bspw. Radial- oder Axialflussmaschine mit einem als Innen- oder auch als Außenläufer ausgebildeten Rotor etc. die verschiedenen Komponenten der Maschine unterschiedlich angeordnet sein können. Dies hat jedoch keinen Einfluss auf das im Folgenden dargestellte erfindungsgemäße Prinzip.

Der Elektromotor 100 weist einen Stator 120 sowie einen als Innenläufer ausgebildeten Rotor 110 auf, wobei der Rotor 110 innerhalb des Stators 120 angeordnet ist und im Betriebszustand des Elektromotors 100 um eine Rotationsachse rotiert. Der Rotor 110 ist drehfest mit einer Welle 130 verbunden, so dass eine Rotation des Rotors 110 über die Welle 130 auf eine nicht dargestellte anzutreibende Komponente, bspw. auf einen Propeller eines Flugzeugs, übertragbar ist.

Der Stator 120 weist ein Statorwicklungssystem 121 mit einer Vielzahl von magnetischen Mitteln 122 auf, die bspw. als Statorwicklungen 122 realisiert sein können. Jede der Wicklungen 122 wird durch zumindest einen elektrischen Leiter gebildet, der im Betriebszustand des Elektromotors 100 von einem elektrischen Strom durchflossen wird. Die Statorwicklungen 122 sind häufig als dreiphasige Wicklungen realisiert, weisen also drei Leitungen bzw. Phasen 122a, 122b, 122c auf.

Der Rotor 110 weist ebenfalls magnetische Mittel 111 auf, die bspw. als Permanentmagnete 111 oder alternativ als erregte bzw. erregbare Wicklungen ausgebildet sein können. Im Folgenden wird angenommen, dass es sich um Permanentmagnete 111 handelt. Das Statorwicklungssystem 121 und der Rotor 110, d.h. konsequenterweise und insbesondere die Statorwicklungen 122 und die Permanentmagnete 111, sind derart ausgebildet und durch einen Luftspalt voneinander beabstandet angeordnet, dass sie im Betriebszustand des Elektromotors 100 elektromagnetisch miteinander wechselwirken. Dieses Konzept einschließlich der Bedingungen für die Ausbildung und genaue Anordnung der magnetischen Mittel 111, 122 bzw. von Rotor 110 und Stator 120 sind an sich bekannt und werden daher im Folgenden nicht näher erläutert.

Es sei lediglich erwähnt, dass zum Betreiben der elektrischen Maschine 100 als Elektromotor die Statorwicklungen 122 mit Hilfe einer lediglich angedeuteten Energiequelle 200 mit einem elektrischen Strom über eine elektrische Leitung 230 beaufschlagt werden, der bewirkt, dass die Wicklungen 122 dementsprechende Magnetfelder erzeugen, welche mit den Magnetfeldern der Permanentmagnete 111 des Rotors 110 in elektromagnetische Wechselwirkung treten. Dies resultiert bekanntermaßen darin, dass bei geeigneter Ausbildung und Anordnung der genannten Komponenten zueinander der Rotor 110 und mit ihm die Welle 130 sowie der genannte Propeller in Rotation versetzt werden. Zur Bereitstellung des benötigten elektrischen Stroms umfasst die Energiequelle 200 eine Stromquelle 210, die bspw. als Gleichstromquelle ausgebildet sein kann, sowie eine Leistungselektronik 220, die den von der Stromquelle 210 gelieferten Strom, bspw. ein Gleichstrom einer Batterie 210, in einen zum Betrieb des Elektromotors 100 geeigneten Strom, bspw. in einen Wechselstrom, wandelt. Dieser Strom wird über die Leitung 230 dem Statorwicklungssystem 121 bzw. den Spulen 122 zugeführt (nicht im Detail dargestellt).

Zum Betreiben der elektrischen Maschine 100 als Generator wird anstelle der Energiequelle 200 ein elektrischer Verbraucher elektrisch mit den Statorwicklungen 122 verbunden. Der Rotor 110 wird mit Hilfe der Welle 130 in Rotation versetzt, so dass durch die elektromagnetische Wechselwirkung zwischen den Permanentmagneten 111 und den Statorwicklungen 122 elektrische Spannungen in den Wicklungen 122 induziert werden. Diese können über entsprechende, jedoch nicht dargestellte Kontakte abgegriffen und dem elektrischen Verbraucher zur Verfügung gestellt werden.

Da die grundsätzliche Arbeitsweise einer elektrischen Maschine 100 bekannt ist, wird an dieser Stelle auf eine weiter gehende Erläuterung verzichtet.

Die FIG 2 zeigt eine Prinzipdarstellung einer redundanten elektrischen Maschine 100 zur Veranschaulichung des hier zum Einsatz kommenden Konzepts. Die Maschine 100 ist unter Ausnutzung einer elektromagnetischen Wechselwirkung als elektrischer Generator zum Bereitstellen einer elektrischen Spannung oder als Elektromotor zum Antreiben eines Vortriebsmittels konfigurierbar ist, wobei im Folgenden davon ausgegangen wird, dass die Maschine 100 eingesetzt wird, um ein Vortriebsmittel 10, bspw. einen Propeller, eines nicht weiter dargestellten Flugzeugs anzutreiben. Hierzu ist die Maschine 100 als Elektromotor ausgebildet und über eine Welle 130 mit dem Propeller 10 verbunden. Der Elektromotor 100 ist, wie im Folgenden erläutert, eingerichtet, um die Welle 130 und damit den Propeller 10 in Rotation zu versetzen.

Die hier dargestellte elektrische Maschine 100 weist zwei Systeme 101, 102 auf, die jeweils wie im Zusammenhang mit der FIG 1 beschrieben einen Stator 120, 120' sowie einen Rotor 110, 110' umfassen, welche elektromagnetisch miteinander wechselwirken. Mit dieser Doppelauslegung wird eine Redundanz der Maschine 100 erzielt. Das erste System 101 umfasst einen ersten Rotor 110 mit ersten Permanentmagneten 111, wobei der Rotor 110 bzw. die Permanentmagnete 111 einem ersten Statorwicklungssystem 121 eines ersten Stators 120 des ersten Systems 101 zugeordnet sind und mit diesem elektromagnetisch wechselwirken. Hierzu sind der erste Rotor 110 und das erste Statorwicklungssystem 121 einen ersten Luftspalt 113 zwischen sich bildend zueinander angeordnet. In analoger Weise umfasst das zweite System 102 einen zweiten Rotor 110' mit zweiten Permanentmagneten 111', wobei der zweite Rotor 110' bzw. die zweiten Permanentmagnete 111' einem zweiten Statorwicklungssystem 121' eines zweiten Stators 120' des zweiten Systems 102 zugeordnet sind und mit diesem elektromagnetisch wechselwirken. Hierzu sind der zweite Rotor 110' und das zweite Statorwicklungssystem 121' einen zweiten Luftspalt 113' zwischen sich bildend zueinander angeordnet. Die beiden Systeme 101, 102 sind also weitestgehend identisch zueinander. Beide Rotoren 110, 110' sind drehfest mit der Welle 130 verbunden, um diese antreiben zu können, sind also dementsprechend in axialer Richtung hintereinander auf der Welle 130 angeordnet. Desweiteren sind die Rotoren 110, 110' gegenüber den Statorwicklungssystemen 121, 121' rotierbar.

Im Folgenden wird davon ausgegangen, dass im zweiten System 102 mit dem zweiten Stator 120' und dem zweiten Rotor 110' ein Fehlerfall auftritt, bspw. ein Kurzschluss im zweiten Statorwicklungssystem 121'. Dies ist durch den Blitz symbolisiert. Damit wird der zweite Rotor 110' nicht mehr aufgrund der elektromagnetischen Wechselwirkung mit dem zweiten Statorwicklungssystem 121' angetrieben. Da der zweite Rotor 110' aber drehfest mit der Welle 130 verbunden ist und die Welle 130 nach wie vor vom ersten System 101 über den ersten Rotor 110 in Rotation versetzt wird, dreht auch der zweite Rotor 110' inklusive der zweiten Permanentmagnete 111' mit und induziert demzufolge eine elektrische Spannung im zweiten, fehlerhaften Statorwicklungssystem 121'. Dies kann im schlimmsten Fall zu einem Brand in der elektrischen Maschine 100 führen, was insbesondere an Bord eines Flugzeuges fatale Folgen haben kann.

Um das Induzieren der elektrischen Spannung im fehlerhaften Statorwicklungssystem 121' zu unterbinden, wird das Konzept verfolgt, im Fehlerfall die Permanentmagnete 111' des dem fehlerhaften Statorwicklungssystem 121' zugeordneten Rotors 110' zu entmagnetisieren. Um dies zu erreichen, weist die elektrische Maschine 100 eine Entmagnetisierungseinrichtung 300 auf, mit der insbesondere bzw. zumindest bei Vorliegen eines Fehlerfalls in einem fehlerhaften Statorwicklungssystem 121' eine gezielte Entmagnetisierung der Permanentmagnete 111' des dem fehlerhaften Statorwicklungssystem 121' zugeordneten Rotors 110' durchführbar ist. Dabei ist die Entmagnetisierungseinrichtung 300 derart ausgebildet, dass sie für jeden Rotor 110, 110' separat eine Entmagnetisierung der jeweiligen Permanentmagnete 111, 111' bewirken kann, so dass im Fehlerfall lediglich die Permanentmagnete 111' desjenigen Rotors 110' entmagnetisiert werden, die dem fehlerhaften Statorwicklungssystem 121' zugeordnet sind. Gleichzeitig würden also die Permanentmagente 111 des Rotors 110, der dem nicht fehlerhaften Statorwicklungssystem 121 zugeordnet ist, nicht entmagnetisiert werden, so dass der Betrieb der elektrischen Maschine 100 aufrecht erhalten werden kann. Dieses potentielle Wirken der Entmagnetisierungseinrichtung 300 ist durch die entsprechenden, auf die Permanentmagnete 111, 111' weisenden Pfeile symbolisiert. Die Entmagnetisierungseinrichtung 300 ist in FIG 2 lediglich unspezifisch symbolisiert, da sie, wie im Folgenden gezeigt, in verschiedenen Ausführungen realisiert sein kann, denen jedoch das Grundkonzept gemein ist, dass die Permanentmagnete 111, 111' je nach Bedarf entmagnetisiert werden können. An dieser Stelle sei bereits erwähnt, dass die verschiedenen Ausführungsformen der Entmagnetisierungseinrichtung 300 durchaus miteinander kombiniert werden können.

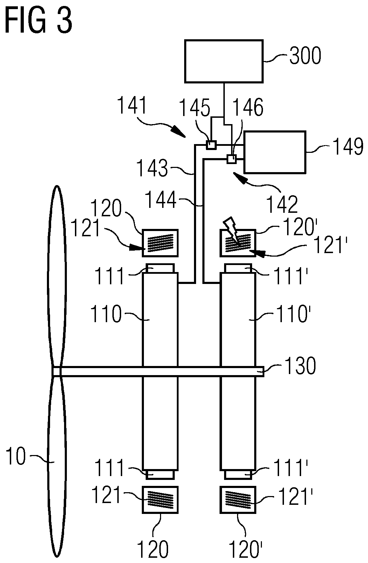

Die FIG 3 zeigt die elektrische Maschine 100 mit der Entmagnetisierungseinrichtung 300 in einer ersten konkreten Ausführungsform. Hierbei wird davon ausgegangen, dass die elektrische Maschine 100 mit einer Rotorkühlung 140 zur individuellen Kühlung der beiden Rotoren 110, 110' ausgestattet ist. Die Rotorkühlung 140 weist für jeden Rotor 110, 110' ein dem jeweiligen Rotor 110, 110' zugeordnetes Kühlsystem 141, 142 auf. Jedes Kühlsystem 141, 142 ist separat aktivierbar und deaktivierbar sowie eingerichtet und angeordnet, um nach Aktivierung lediglich denjenigen Rotor 110, 110' und insbesondere dessen jeweilige Permanentmagnete 111, 111' separat zu kühlen, dem es zugeordnet ist. Die Deaktivierung eines jeweiligen Kühlsystems 141, 142 kann durch die Entmagnetisierungseinrichtung 300 erfolgen, welche also eingerichtet ist, um bei Bedarf, insbesondere im Fehlerfall, und gezielt jedes der Kühlsysteme 141, 142 separat deaktivieren zu können. Die Deaktivierung führt dazu, dass derjenige Rotor 110, 110', dem das deaktivierte Kühlsystem 141, 142 zugeordnet ist, und insbesondere dessen magnetisches Mittel 111, 111' nicht weiter gekühlt wird. In der Konsequenz hat das Ausbleiben der Kühlung zur Folge, dass der jeweilige Rotor 110, 110' und insbesondere dessen Permanentmagnete 111, 111' überhitzen, was sich bekanntermaßen darin äußert, dass die Magnetisierung der überhitzten Permanentmagente 111, 111' instabil wird und zusammenbricht.

Die Rotorkühlung 140 bzw. die den Rotoren 111, 111' zugeordneten Kühlsysteme 141, 142 können bspw. derart ausgebildet sein, dass sie mit einem fluiden Kühlmedium arbeiten, welches einem Kühlmediumtank 149 entnommen und den Rotoren 110, 110' über ein jeweiliges Leitungssystem 143, 144 zugeführt wird. In dem Leitungssystem 143, 144 sind bspw. Ventile 145, 146 angeordnet, über die der Fluss des Kühlmediums zu einem jeweiligen Kühlsystem 141, 142 beeinflusst werden kann. Insbesondere ist die Entmagnetisierungseinrichtung 300 zur Steuerung der Ventile 145, 146 eingerichtet, um im Fehlerfall ein jeweiliges Ventil 145, 146 zu schließen und so den Zufluss des Kühlmediums zum jeweiligen Rotor 110, 110' zu unterbinden. Wenn also bspw. ein Fehlerfall im zweiten Statorwicklungssystem 121' auftritt, wird die Entmagnetisierungseinrichtung 300 das entsprechende Ventil 146 des Kühlsystems 142 schließen. Der zweite Rotor 110' und seine Permanentmagnete 111' werden anschließend überhitzen und die Magnetisierung der Magnete 111' wird zusammenbrechen.

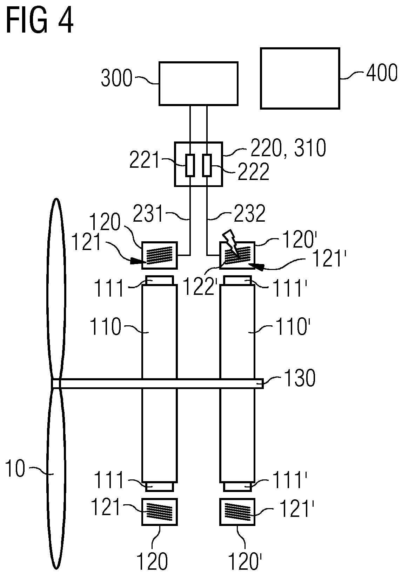

In einer zweiten Ausführungsform, die in der FIG 4 dargestellt ist, wird auf die Leistungselektronik 220 zurückgegriffen, die bereits im Zusammenhang mit der FIG 1 erwähnt wurde. Die Stromquelle 210 ist in der FIG 4 der Übersichtlichkeit wegen nicht dargestellt. Die Leistungselektronik 220 der elektrischen Maschine 100 umfasst für jedes Statorwicklungssystem 121, 121' jeweils eine Leistungselektronikeinheit 221, 222. Diese den jeweiligen Statorwicklungssystemen 121, 121' zugeordneten Leistungselektronikeinheiten 221, 222 sind eingerichtet, um dem Statorwicklungssystem 121, 121', dem sie zugeordnet sind, im Normalbetrieb, d.h. wenn kein Fehlerfall vorliegt, des jeweiligen Statorwicklungssystems 121, 121' über elektrische Leitungen 231, 232 einen zum gewünschten Betrieb des jeweiligen Statorwicklungssystems 121, 121' geeigneten Wechselstrom bereitzustellen und zuzuführen. Dabei werden die Leistungselektronikeinheiten 221, 222 typischerweise von einer Steuerung/Regelung 400 beeinflusst, wobei die Entmagnetisierungseinrichtung 300 bspw. als Teil der Steuerung/Regelung 400 ausgebildet sein kann.

Die Entmagnetisierungseinrichtung 300 betreibt die Leistungselektronik 220 in der zweiten Ausführungsform derart, dass bei Vorliegen des Fehlerfalls die dem fehlerhaften Statorwicklungssystem 121' zugeordnete Leistungselektronikeinheit 222 dem dem fehlerhaften Statorwicklungssystem 121' zuzuführenden Wechselstrom gezielt einen vorgegebenen Oberschwingungsanteil aufprägt. Es ist ein an sich bekanntes Phänomen, dass es bei Vorhandensein von Oberschwingungen zu üblicherweise unerwünschter Erwärmung der betroffenen Komponenten kommt. Dementsprechend werden zumeist Maßnahmen getroffen, die das Auftreten von Oberschwingungen reduzieren bzw. idealerweise weitestgehend vermeiden. In der hier vorliegenden Anwendung wird im Unterschied zu diesem üblichen Vorgehen gezielt dafür gesorgt, dass der dem fehlerhaften Statorwicklungssystem 121' zugeführte Wechselstrom vorgegebene Oberschwingungsanteile aufweist, da diese eine Erwärmung und damit eine Entmagnetisierung der Permanentmagnete 111' bewirken. Es sei betont, dass mit den vorgegebenen Oberschwingungsanteilen nicht diejenigen Oberschwingungen gemeint sind, die ggf. ohnehin vorhanden sind, sondern ggf. zusätzlich aufgeprägte Schwingungen. Um diese zusätzlichen, vorgegebenen Oberschwingungsanteile festzulegen, kann bspw. im Rahmen der Auslegung des Motors 100 berechnet werden, welche Oberschwingungen mit welcher Stärke ausreichend hohe Rotorverluste verursachen, wobei diese dann als Sollwertvorgabe für die jeweilige Leistungselektronikeinheit 221, 222 verwendet werden. Im Fehlerfall kann die dem fehlerhaften Statorwicklungssystem 121' zugeordnete Leistungselektronikeinheit 222 dann das veränderte Muster in den Motor 100 einprägen und dies führt zu der erwünschten starken Erhöhung der Temperatur der Magnete 111'.

Kern dieses Ansatzes ist also, dass die gezielt aufgeprägten Oberschwingungen ein Erhitzen der Magnete 111 bzw. 111' bewirken. Es sei erwähnt, dass die konkret beschriebene Ansteuerung mit ausgeprägten Oberschwingungsanteilen nicht unbedingt in jedem Fehlerfall ohne Weiteres umsetzbar ist. Liegt der Kurzschluss bzw. der Fehlerfall bspw. an den Klemmen der entsprechenden Leistungselektronikeinheit 221, 222, kann diese Leistungselektronikeinheit 221, 222 nicht zum Einspeisen verwendet werden. Um diese eventuelle Schwierigkeit zu umgehen, könnte zur Erzeugung und Einspeisung der Oberschwingungen anstelle der Verwendung der Leistungselektronik 220 auf eine separate, zusätzliche Baugruppe zurückgegriffen werden, die im Extremfall allein für die im Fehlerfall anstehende Erzeugung und Einspeisung der Oberschwingungen zuständig ist.

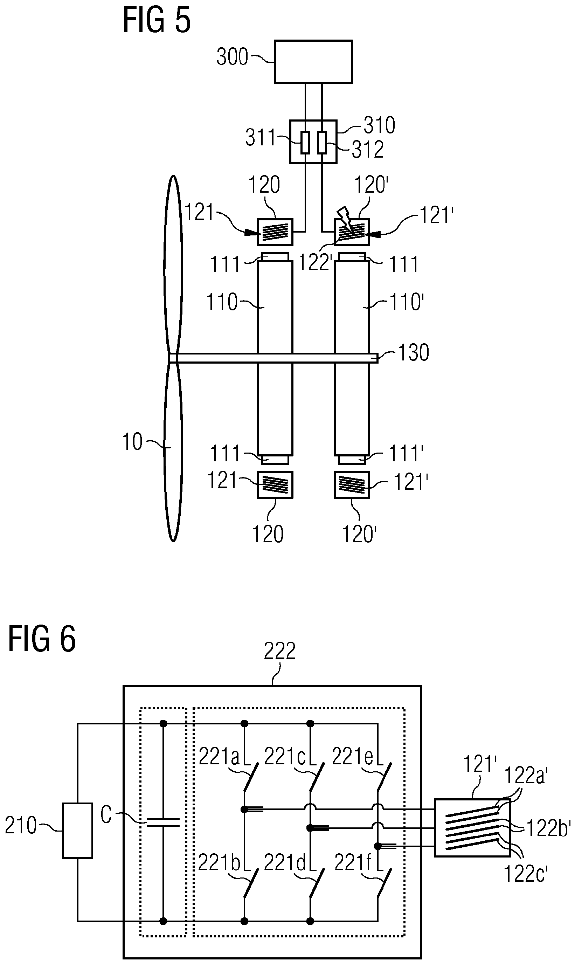

Die FIG 5 zeigt eine Möglichkeit der Realisierung einer dritten Ausführungsform zur Entmagnetisierung der Permanentmagnete 111, 111'. In dieser dritten Ausführungsform wird die Entmagnetisierung durch den Aufbau eines magnetischen Gegenfeldes erreicht. Hierzu ist eine Vorrichtung 310 vorgesehen, die zur Erzeugung von magnetischen Gegenfelderen für jeden Rotor 110, 110' eine dem jeweiligen Rotor 110, 110' sowie dem entsprechenden Statorwicklungssystem 121, 121' zugeordnete Einheit 311, 312 zur Erzeugung eines jeweiligen magnetischen Gegenfeldes aufweist. Jede der Einheiten 311, 312 ist durch die Entmagnetisierungseinrichtung 300 separat aktivierbar und derart angeordnet und ausgebildet, dass sie nach Aktivierung ein magnetisches Gegenfeld erzeugt, welches im Wesentlichen auf den der Einheit 311, 312 zugeordneten Rotor 110, 110' wirkt und dabei dessen magnetisches Mittel 111, 111' entmagnetisiert.

Die Entmagnetisierungseinrichtung 300 betreibt die Vorrichtung 310 derart, dass bei Vorliegen des Fehlerfalls die dem fehlerhaften Statorwicklungssystem 121' bzw. dem entsprechenden Rotor 110' zugeordnete Einheit 312 aktiviert wird und gezielt das Gegenfeld zur Entmagnetisierung des dem fehlerhaften Statorwicklungssystem 121' zugeordneten Permanentmagneten 111' erzeugt.

Zur Erzeugung eines solchen magnetischen Gegenfeldes kann jeweils bspw. eine der ohnehin vorhandenen Wicklungen des jeweiligen Statorwicklungssystems 121, 121' verwendet werden. Die Einheiten 311, 312, die in diesem Fall vorteilhafterweise durch die jeweiligen Leistungselektronikeinheiten 221, 222 realisiert sein können, speisen zur Erzeugung des Gegenfeldes einen entsprechenden elektrischen Strom in die jeweilige Wicklung des fehlerhaften Statorwicklungssystems 121, 121'. Mit anderen Worten stellen also die Leistungselektronik 220 bzw. ihre Einheiten 221, 222 im Zusammenwirken mit den Wicklungen der Statorwicklungssysteme 121, 121' die Vorrichtung 310 zum Aufbau des magnetischen Gegenfeldes bzw. deren Einheiten 311, 312 dar.

Der Vollständigkeit halber sei erwähnt, dass diese dritte Ausführungsform, die auf der aktiven Erzeugung eines magnetischen Gegenfeldes beruht, nur dann umsetzbar ist, wenn die Wicklung, die zur Erzeugung des Gegenfeldes bestromt werden soll, nicht selbst fehlerhaft ist. In einem solchen Fall würde bevorzugt eine der anderen Ausführungsformen zum Einsatz kommen. Alternativ könnte bzw. müsste eine separate Wicklung vorgesehen sein, die bestrombar ist und das Gegenfeld aufbauen kann.

Die FIG 6 bezieht sich auf ein Detail einer vierten Ausführungsform zur Entmagnetisierung der Permanentmagnete 111, 111'. Die grundsätzliche Konfiguration der vierten Ausführungsform ist der FIG 4 zu entnehmen. In dieser vierten Ausführungsform wird, ähnlich wie in der dritten Ausführungsform, ein magnetisches Gegenfeld erzeugt, welches dem Feld der Permanentmagnete 111, 111' desjenigen Rotors 110, 110' entgegenwirkt, der dem fehlerhaften Statorwicklungssystem 121, 121' zugeordnet ist. Die hierzu wiederum zum Einsatz kommende Vorrichtung 310 zur Erzeugung von magnetischen Gegenfelderen ist in dieser Ausführungsform als Kurzschließvorrichtung 310 der Entmagnetisierungseinrichtung 300 ausgebildet. Diese Kurzschließvorrichtung 310 ist eingerichtet, um im Fehlerfall eine oder mehrere der Leitungen bzw. Phasen 122a', 122b', 122c' des fehlerhaften Statorwicklungssystems 121' kurzzuschließen. Da wie einleitend beschrieben der Rotor 110' mit den Permanentmagneten 111' angetrieben durch die Welle 130 nach wie vor rotiert, wird im Statorwicklungssystem 121' eine Spannung induziert. Aufgrund des Kurzschlusses bewirkt diese Spannung einen elektrischen Strom, der seinerseits den Aufbau eines Magnetfeldes begründet, wodurch die Magnete 111' des dem fehlerhaften Wicklungssystem 121' zugeordneten Rotors 110' entmagnetisiert werden.

Das Kurzschließen kann bspw. mit Hilfe der jeweiligen Leistungselektronikeinheit 221, 222 realisiert werden. Diese umfasst typischerweise eine Vielzahl von geeignet miteinander verschalteten Leistungshalbleitern bzw. Halbleiterschaltern und das Kurzschließen kann dadurch erreicht werden, dass die entsprechenden Schalter geschlossen werden. Derartige typische Leistungselektroniken sind bspw. in WO2016169817A1 sowie in WO2016005101A1 dargestellt, wobei durch entsprechende Einstellung der dortigen Halbleiterschalter das oben beschriebene Kurzschließen der angeschlossenen Leitung 122' erreicht werden kann.

Ein vereinfachtes, aber konkretes Beispiel für eine geeignete Schaltung einer jeweiligen Leistungselektronikeinheit 221, 222 ist in der FIG 6 dargestellt. Die FIG 6 zeigt exemplarisch die dem fehlerhaften Statorwicklungssystem 121' zugeordnete Leistungselektronikeinheit 222. Die dem anderen Statorwicklungssystem 121 zugeordnete Leistungselektronikeinheit 221 ist analog hierzu aufgebaut, mit dem Statorwicklungssystem 121 verbunden und arbeitet in gleicher Weise wie im Folgenden für die Leistungselektronikeinheit 222 erläutert. Die Leistungselektronikeinheit 222 ist typischerweise mit sechs Leistungshalbleitern bzw. Halbleiterschaltern 222a-222f aufgebaut. Schaltet man gleichzeitig alle in der FIG 6 "oben" angeordneten Schalter 222a, 222c, 222e oder aber alle "unten" angeordneten Schalter 222b, 222d, 222f ein, so bewirkt das einen dreiphasigen Kurzschluss der Klemmen des Motors 100 bzw. des entsprechenden Statorwicklungssystems 121', was u.a. dazu führt, dass sich ein Bremsmoment ausbildet. Je nach Motorauslegung insbesondere bzgl. Kurzschlussfestigkeit ist dieses Moment mehr oder weniger stark. Es wird jedoch keine Leistung mehr in den Motor eingespeist, sondern er baut seine innere Energie (Trägheitsmoment) entsprechend ab, es sei denn der Kurzschlussstrom wird -wie im vorliegenden Fall- über die Welle 130 weiter gespeist.

In der vierten Ausführungsform kann also im genannten Beispiel die Entmagnetisierungseinrichtung 300 wie schon in der zweiten und in der dritten Ausführungsform auf die Leistungselektronik 220 wirken. Dabei ist die Kurzschließvorrichtung 310 in der vierten Ausführungsform im beschriebenen Beispiel in Form der Leistungselektronik 220 bzw. in Form der beiden Leistungselektronikeinheiten 221, 222 realisiert. Mit anderen Worten stellen also die Leistungselektronik 220 bzw. ihre Einheiten 221, 222 die Kurzschließvorrichtung 310 dar, welche im Fehlerfall von der Entmagnetisierungseinrichtung 300 derart angesteuert wird, dass die entsprechenden Halbleiterschalter in einen Schaltzustand gebracht werden, bei dem die elektrische Leitung 122' des fehlerhaften Statorwicklungssystems 121' kurzgeschlossen ist. Natürlich kann die Kurzschließvorrichtung 310 auch als zusätzliches Bauteil vorgesehen sein und unabhängig von der Leistungselektronik 220 arbeiten, dabei bspw. elektrisch zwischen die Leistungselektronik 220 und den Stator 120 geschaltet sein.

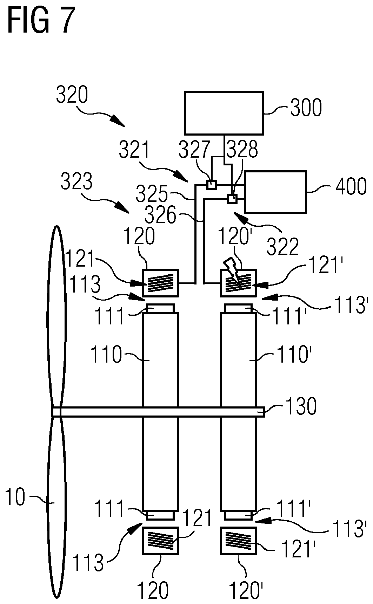

Die FIG 7 zeigt eine erste Variante einer fünften Ausführungsform. In der fünften Ausführungsform, die im Folgenden in mehreren Varianten beschrieben wird, wird die Entmagnetisierung grundsätzlich dadurch erreicht, dass der dem fehlerhaften Statorwicklungssystem 121' zugeordnete Rotor 110' bzw. dessen Permanentmagnete 111' aufgeheizt werden, um die Entmagnetisierung dieser Permanentmagnete 111' zu bewirken. Im Unterschied zur ersten Ausführungsform, bei der die Kühlung des betroffenen Rotors 110' abgeschaltet wird, so dass sich der Rotor 110' aufgrund des normalen Betriebs erwärmt, wird der Rotor 110' in der fünften Ausführungsform aktiv aufgeheizt.

Hierzu weist die Entmagnetisierungseinrichtung 300 in allen Varianten eine Heizvorrichtung 320 auf, wobei die Heizvorrichtung 320 ebenfalls in allen Varianten für jeden Rotor 110, 110' eine dem jeweiligen Rotor 110, 110' zugeordnete erste 321 bzw. zweite Aufheizeinrichtung 322 aufweist. Die beiden Aufheizeinrichtungen 321, 322 sind durch die Entmagnetisierungseinrichtung 300 bei Bedarf, insbesondere im Fehlerfall, und gezielt separat aktivierbar, d.h. es kann bedarfsweise entweder die erste 321 oder die zweite Aufheizeinrichtung 322 aktiviert werden. Die Aufheizeinrichtungen 321, 322 sind derart eingerichtet und angeordnet, dass nach ihrer Aktivierung lediglich derjenige Rotor 110, 110' und insbesondere dessen Permanentmagnete 111, 111' separat aufgeheizt werden, dem die jeweilige Aufheizeinrichtung 321, 322 zugeordnet ist. Die erste Aufheizeinrichtung 321 bewirkt also lediglich eine Aufheizung des ersten Rotors 110 bzw. der ersten Permanentmagnete 111, während die zweite Aufheizeinrichtung 322 lediglich eine Aufheizung des zweiten Rotors 110' bzw. der zweiten Permanentmagnete 111' bewirkt.

In der ersten Variante der fünften Ausführungsform umfasst die Heizvorrichtung 320 eine konfigurierbare Fluidverbindung 323 zwischen der elektrischen Maschine 100 und einer Wärmequelle 500, wobei über die Fluidverbindung 323 Wärme von der Wärmequelle 500 bspw. in Form von heißen Gasen zur elektrischen Maschine 100 führbar ist.

Die Wärmequelle 500 kann hierzu eine Einrichtung zur Erzeugung von heißer Luft umfassen, wobei die erzeugte heiße Luft die zur elektrischen Maschine 100 führbare Wärme darstellt. Diese Einrichtung 500 kann bspw. ein Heißluftventilator umfassend eine Einrichtung zur Erzeugung von Hitze, bspw. ein elektrisches Heizelement, sowie ein Gebläse sein. Alternativ oder zusätzlich und insbesondere bevorzugt im Falle einer Anwendung der elektrischen Maschine 100 in einem hybrid-elektrisch angetriebenen Luftfahrzeug kann die Einrichtung 500 eine Verbrennungskraftmaschine wie bspw. eine Turbine sein. Derartige Turbinen 500 umfassen in der Regel mehrere Turbinenstufen, in denen im Betrieb jeweils heiße Luft anfällt, die als sog. Zapfluft ("bleed air") bezeichnet wird und zur weiteren Verwendung entnommen werden kann. Im Fall einer solchen Anwendung wird diese Zapfluft der Fluidverbindung 323 zur Verfügung gestellt, so dass die heiße Zapfluft bei Bedarf, d.h. im Fehlerfall, dem dem fehlerhaften Statorwicklungssystem 121' zugeordneten Rotor 110' zugeführt werden kann.

Die konfigurierbare Fluidverbindung 323 dient zur Führung der in der Wärmequelle 500 bereitgestellten Wärme zur elektrischen Maschine 100 und insbesondere zu den Rotoren 110, 110' bzw. zu deren Permanentmagneten 111, 111'. Hierzu weist die Fluidverbindung 323 für jeden Rotor 110, 110' eine dem jeweiligen Rotor 110, 110' zugeordnete Leitung 325, 326 zum Führen der Wärme zum jeweiligen Rotor 110, 110' auf. Die Leitungen 325, 326 sind dabei als Teil der dem jeweiligen Rotor 110, 110' zugeordneten Aufheizeinrichtung 321, 322 zu verstehen und derart angeordnet, dass eine über die jeweilige Leitung 325, 326 von der Wärmequelle 500 zugeführte Wärme möglichst direkt auf die jeweiligen Permanentmagnete 111, 111' wirken kann. Bspw. können die Leitungen 325, 326 hierzu derart angeordnet sein, dass die Wärme direkt in den jeweiligen Luftspalt 113, 113' gelangt, wo sie sich ausbreiten und die jeweiligen Permanentmagente 111, 111' direkt aufheizen kann.

Die Entmagnetisierungseinrichtung 300 ist eingerichtet, um die Fluidverbindung 323 insbesondere im Fehlerfall derart zu konfigurieren, dass die Wärme nur zu demjenigen Rotor 110' zugeführt wird, der dem fehlerhaften Statorwicklungssystem 121' zugeordnet ist. Hierfür können die Aufheizeinrichtungen 321, 322 in der jeweiligen Leitung 325, 326 entsprechend angeordnete und separat einstellbare Ventile 327, 328 umfassen. Im Normalbetrieb sind die Ventile 327, 328 geschlossen, so dass die Wärme von der Wärmequelle bzw. Turbine 500 nicht zur elektrischen Maschine 100 gelangt. Bei Vorliegen des Fehlerfalls, bspw. im zweiten Statorwicklungssystem 121', würde die Entmagnetisierungsvorrichtung 300 die Fluidverbindung 323 durch Öffnen des Ventils 328 derart konfigurieren und damit die entsprechende Aufheizeinrichtung 322 aktivieren, dass die Wärme dem Rotor 110' zugeführt wird.

Die in der FIG 7 dargestellte Realisierung der konfigurierbaren Fluidverbindung 323 mit Aufheizeinrichtungen 321, 322 mit den Leitungen 325, 326 und den Ventilen 327, 328 ist insbesondere hinsichtlich der genauen Anordnung und Positionierung nur exemplarisch. Bspw. könnte alternativ vorgesehen sein, dass die heiße Luft von der Wärmequelle 500 nicht - wie dargestellt- direkt in die Leitungen 325, 326 gelangt, sondern zunächst in einen Tank o.ä.. Auch die Positionierung der Ventile 327, 328 in den Leitungen 325, 326 ist rein exemplarisch. Es könnte sich anbieten, die Ventile 325, 326 möglichst nah an den Rotoren 110, 110' bzw. Luftspalten 113, 113' zu positionieren, um zu gewährleisten, dass die heiße Luft innerhalb kürzester Zeit in den jeweiligen Luftspalt 113, 113' gelangt.

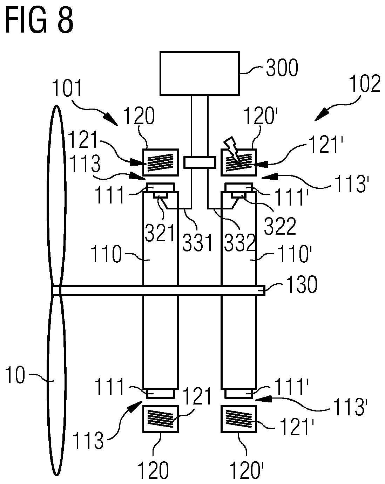

In der zweiten Variante der fünften Ausführungsform, die in FIG 8 dargestellt ist, umfasst die Heizvorrichtung 320 ebenfalls die bereits beschriebenen Aufheizeinrichtungen 321, 322. Auch hier sind die beiden Aufheizeinrichtungen 321, 322 durch die Entmagnetisierungseinrichtung 300 bei Bedarf, insbesondere im Fehlerfall, und gezielt separat aktivierbar und derart eingerichtet und angeordnet, dass nach ihrer Aktivierung lediglich derjenige Rotor 110, 110' und insbesondere dessen Permanentmagnete 111, 111' separat aufgeheizt werden, dem die jeweilige Aufheizeinrichtung 321, 322 zugeordnet ist. Im Unterschied zur ersten Variante, bei der die Aufheizeinrichtungen 321, 322 Leitungen 325, 326 sowie Ventile 327, 328 umfassten, sind die Aufheizeinrichtungen 321, 322 in der zweiten Variante als von der Entmagnetisierungseinrichtung 300 separat aktivierbare elektrische Heizelemente 321, 322 ausgebildet. Dementsprechend ist die Entmagnetisierungseinrichtung 300 eingerichtet, um bei Bedarf, d.h. im Fehlerfall, und gezielt jedes elektrische Heizelement 321, 322 separat aktivieren zu können. Nach einer Aktivierung eines jeweiligen elektrischen Heizelementes 321, 322 werden nur derjenige Rotor 110, 110', dem das aktivierte elektrische Heizelement 321, 322 zugeordnet ist, und insbesondere dessen Permanentmagente 111, 111' aufgeheizt.

Die zum Betrieb der Heizelemente 321, 322 benötigte Energie kann den Heizelementen 321, 322 von der Entmagnetisierungseinrichtung 300 über elektrische Leitungen 331, 332 und bspw. über Schleifringe oder aber induktiv zugeführt werden. Diese beiden Optionen sind in FIG 8 durch eine Übertragungseinrichtung 329 symbolisiert. Die Aktivierung eines jeweiligen Heizelementes 321, 322 kann im einfachsten Fall dadurch erfolgen, dass dem jeweiligen Heizelement 321, 322 die zu seinem Betrieb benötigte Energie zugeführt wird.

Obwohl sich die obigen Ausführungen ausschließlich damit beschäftigen, dass der Fehlerfall im zweiten Statorwicklungssystem 121' des zweiten Systems 102 auftritt, ist davon auszugehen, dass sich das erste System 101 in analoger Weise verhält, wenn dort ein Fehlerfall eintritt.

Die in den verschiedenen Ausführungsformen vorgestellte Lösung erlaubt eine effektive Nutzung der Redundanz der elektrischen Maschine 100 auch mit mehreren Statorwicklungssystemen 121, 121' und Rotoren 110, 110' durch Verhinderung des unerwünschten Energieeintrags in ein schadhaftes Wicklungssystem 121, 121'. Dies wird dadurch erreicht, dass die Magnetfelder des dem fehlerhaften Statorwicklungssystem 121' zugeordneten Rotors 110' durch die gezielte Entmagnetisierung seiner Permanentmagnete 111' entfernt werden. Es kann somit keine elektromagnetische Wechselwirkung zwischen diesen nun entmagnetisierten Permanentmagneten 111' und dem zugeordneten Statorwicklungssystem 121' und damit auch keine Induktion von Spannungen auftreten. Dies resultiert letztlich in einer wesentlichen Reduzierung der Auftretenswahrscheinlichkeit eines Brandes der elektrischen Maschine 100.

## Patentansprüche

1. Elektrische Maschine (100), welche eine Wicklungssystemgruppe umfassend zumindest zwei Statorwicklungssysteme (121, 121') sowie eine Rotoranordnung mit zumindest zwei Rotoren (110, 110') aufweist,
wobei
- jeder Rotor (110, 110') der Rotoranordnung zumindest einen Permanentmagneten (111, 111') als magnetisches Mittel umfasst,
- jeder Rotor (110, 110') der Rotoranordnung einem Statorwicklungssystem (121, 121') der Wicklungssystemgruppe zugeordnet und gegenüber dem ihm zugeordneten Statorwicklungssystem (121, 121') rotierbar ist,
- jedes Statorwicklungssystem (121, 121') der Wicklungssystemgruppe und der dem jeweiligen Statorwicklungssystem (121, 121') zugeordnete Rotor (110, 110') der Rotoranordnung derart ausgebildet und einen jeweiligen Luftspalt (113, 113') zwischen sich bildend zueinander angeordnet sind, dass sie elektromagnetisch miteinander wechselwirken können,
**dadurch gekennzeichnet, dass**
- die elektrische Maschine (100) eine Entmagnetisierungseinrichtung (300) aufweist, mit der bei Vorliegen eines Fehlerfalls in einem fehlerhaften Statorwicklungssystem (121, 121') der Wicklungssystemgruppe eine gezielte Entmagnetisierung des magnetischen Mittels (111, 111') des dem fehlerhaften Statorwicklungssystem (121, 121') zugeordneten Rotors (110, 110') durchführbar ist, wobei die Entmagnetisierungseinrichtung (300) eine Heizvorrichtung (320) aufweist, wobei
- die Heizvorrichtung (320) für jeden Rotor (110, 110') der Rotoranordnung eine dem jeweiligen Rotor (110, 110') zugeordnete Aufheizeinrichtung (321, 322) aufweist, wobei jede Aufheizeinrichtung (321, 322) separat aktivierbar und deaktivierbar sowie eingerichtet und angeordnet ist, um nach Aktivierung lediglich denjenigen Rotor (110, 110') und insbesondere dessen magnetisches Mittel (111, 111') separat aufzuheizen, dem die aktivierte Aufheizeinrichtung (321, 322) zugeordnet ist,
- die Entmagnetisierungseinrichtung (300) eingerichtet ist, um bei Bedarf, insbesondere im Fehlerfall, und gezielt jede Aufheizeinrichtung (321, 322) separat aktivieren zu können, wobei die Heizvorrichtung (320) eine konfigurierbare Fluidverbindung (323) zu einer Wärmequelle (500) umfasst,
wobei
- über die Fluidverbindung (323) Wärme von der Wärmequelle (500) zur elektrischen Maschine (100) führbar ist,
- die Fluidverbindung (323) für jeden Rotor (110, 110') der Rotoranordnung eine dem jeweiligen Rotor (110, 110') zugeordnete Leitung (325, 326) zum Führen der Wärme von der Wärmequelle (500) zum jeweiligen Rotor (110, 110') aufweist, wobei die jeweilige Leitung (325, 326) ein Teil der dem jeweiligen Rotor (110, 110') zugeordneten Aufheizeinrichtung (321, 322) ist,
- die Entmagnetisierungseinrichtung (300) eingerichtet ist, um die Fluidverbindung (323) derart zu konfigurieren, dass die Wärme nur zu demjenigen Rotor (110, 110') geführt wird, der dem fehlerhaften Statorwicklungssystem (121, 121') zugeordnet ist.

2. Elektrische Maschine (100) nach Anspruch 1, **dadurch gekennzeichnet, dass** eine Rotorkühlung (140) zur Kühlung der Rotoranordnung vorgesehen ist, wobei
- die Rotorkühlung (140) für jeden Rotor (110, 110') der Rotoranordnung ein dem jeweiligen Rotor (110, 110') zugeordnetes Kühlsystem (141, 142) aufweist, wobei jedes Kühlsystem (141, 142) separat aktivierbar und deaktivierbar sowie eingerichtet und angeordnet ist, um nach Aktivierung lediglich denjenigen Rotor (110, 110') und insbesondere dessen magnetisches Mittel (111, 111') separat zu kühlen, dem es zugeordnet ist,
- die Entmagnetisierungseinrichtung (300) eingerichtet ist, um bei Bedarf, insbesondere im Fehlerfall, und gezielt jedes Kühlsystem (141, 142) separat deaktivieren zu können, wobei nach einer Deaktivierung eines jeweiligen Kühlsystems (141, 142) derjenige Rotor (110, 110'), dem das deaktivierte Kühlsystem (141, 142) zugeordnet ist, und insbesondere dessen magnetisches Mittel (111, 111') nicht weiter gekühlt wird.

3. Elektrische Maschine (100) nach einem der Ansprüche 1 bis 2, **dadurch gekennzeichnet, dass** die Entmagnetisierungseinrichtung (300) eingerichtet ist, um bei Vorliegen des Fehlerfalls dem fehlerhaften Statorwicklungssystem (121, 121') einen Wechselstrom mit einem gezielt aufgeprägten Oberschwingungsanteil zuzuführen.

4. Elektrische Maschine (100) nach Anspruch 3, **dadurch gekennzeichnet, dass** eine Leistungselektronikbaugruppe (220) vorgesehen ist, welche für jedes Statorwicklungssystem (121, 121') eine dem jeweiligen Statorwicklungssystem (121, 121') zugeordnete Leistungselektronikeinheit (221, 222) umfasst, wobei
- jede Leistungselektronikeinheit (221, 222) eingerichtet ist, um dem Statorwicklungssystem (121, 121'), dem sie zugeordnet ist, im Normalbetrieb des jeweiligen Statorwicklungssystems (121, 121') einen zum Betrieb des jeweiligen Statorwicklungssystems (121, 121') geeigneten Wechselstrom bereitzustellen und zuzuführen,
- die Entmagnetisierungseinrichtung (300) eingerichtet ist, um die Leistungselektronikbaugruppe (220) derart zu betreiben, dass bei Vorliegen des Fehlerfalls die dem fehlerhaften Statorwicklungssystem (121, 121') zugeordnete Leistungselektronikeinheit (221, 222) dem dem fehlerhaften Statorwicklungssystem (121, 121') zuzuführende Wechselstrom gezielt den Oberschwingungsanteil aufprägt.

5. Elektrische Maschine (100) nach einem der Ansprüche 1 bis 4, **dadurch gekennzeichnet, dass** eine Vorrichtung (310) zur Erzeugung magnetischer Gegenfelder vorgesehen ist, wobei
- die Vorrichtung (310) zur Erzeugung magnetischer Gegenfelder für jeden Rotor (110, 110') der Rotoranordnung eine dem jeweiligen Rotor (110, 110') zugeordnete Einheit (311, 312) zur Erzeugung eines magnetischen Gegenfeldes aufweist, wobei jede derartige Einheit (311, 312) separat aktivierbar sowie angeordnet und ausgebildet ist, um nach Aktivierung durch Einspeisen eines elektrischen Stroms in das fehlerhafte Statorwicklungssystem (121, 121') ein magnetisches Gegenfeld zu erzeugen, welches im Wesentlichen auf den der Einheit (311, 312) zugeordneten Rotor (110, 110') wirkt und dabei dessen magnetisches Mittel (111, 111') entmagnetisiert,
- die Entmagnetisierungseinrichtung (300) eingerichtet ist, um die Vorrichtung (310) zur Erzeugung magnetischer Gegenfelder derart zu betreiben, dass bei Vorliegen des Fehlerfalls die dem fehlerhaften Statorwicklungssystem (121, 121') zugeordnete Einheit (311, 312) zur Erzeugung eines jeweiligen magnetischen Gegenfeldes gezielt aktivieren zu können.

6. Elektrische Maschine nach einem der Ansprüche 1 bis 4, **dadurch gekennzeichnet, dass** eine Vorrichtung (310) zur Erzeugung magnetischer Gegenfelder vorgesehen ist, wobei
- die Vorrichtung (310) eine Kurzschließvorrichtung (310) ist, mit welcher zumindest eine Phase (122a, 122b, 122c, 122a', 122b', 122c') des fehlerhaften Statorwicklungssystems (121, 121') kurzschließbar ist,
- die Entmagnetisierungseinrichtung (300) eingerichtet ist, um die Kurzschließvorrichtung (310) derart zu betreiben, dass bei Vorliegen des Fehlerfalls zumindest eine Phase (122a, 122b, 122c, 122a', 122b', 122c') des fehlerhaften Statorwicklungssystems (121, 121') kurzgeschlossen wird.

7. Elektrische Maschine nach einem der vorherigen Ansprüche, **dadurch gekennzeichnet, dass**
- die Wärmequelle (500) eine Verbrennungskraftmaschine, insbesondere eine Turbine, und
- die dem dem fehlerhaften Statorwicklungssystem (121, 121') zugeordneten Rotor (110, 110') zugeführte Wärme eine Abwärme der Verbrennungskraftmaschine (500), insbesondere Zapfluft, umfasst.

8. Elektrische Maschine (100) nach einem der vorherigen Ansprüche, **dadurch gekennzeichnet, dass** jede Leitung (325, 326) derart angeordnet und ausgebildet ist, dass die über die jeweilige Leitung (325, 326) zugeführte Wärme in den Luftspalt (113, 113') desjenigen Rotors (110, 110') geführt wird, dem die Leitung (325, 326) zugeordnet ist.

9. Elektrische Maschine (100) nach einem der vorherigen Ansprüche, **dadurch gekennzeichnet, dass** jede Aufheizeinrichtung (321, 322) zumindest ein von der Entmagnetisierungseinrichtung (300) aktivierbares elektrisches Heizelement (321, 322) zum Aufheizen desjenigen Rotors (110, 110') aufweist, dem die jeweilige Aufheizeinrichtung (321, 322) zugeordnet ist, wobei die Entmagnetisierungseinrichtung (300) eingerichtet ist, um bei Bedarf, insbesondere im Fehlerfall, und gezielt jedes elektrische Heizelement (321, 322) separat aktivieren zu können, wobei nach einer Aktivierung eines jeweiligen elektrischen Heizelementes (321, 322) nur derjenige Rotor (110, 110'), dem das aktivierte elektrische Heizelement (321, 322) zugeordnet ist, und insbesondere dessen magnetisches Mittel (111, 111') aufgeheizt wird.

10. Verfahren zum Betreiben einer elektrischen Maschine (100) nach einem der Ansprüche 1 bis 9, **dadurch gekennzeichnet, dass** bei Vorliegen des Fehlerfalls im fehlerhaften Statorwicklungssystem (121, 121') die Entmagnetisierungseinrichtung (300) eine Entmagnetisierung der magnetischen Mittel (111, 111') des dem fehlerhaften Statorwicklungssystem (121, 121') zugeordneten Rotors (110, 110') ausführt.

11. Verfahren nach Anspruch 10, **dadurch gekennzeichnet, dass** zur Entmagnetisierung eine Überhitzung des dem fehlerhaften Statorwicklungssystem (121, 121') zugeordneten Rotors (110, 110') und insbesondere eine Überhitzung der magnetischen Mittel (111, 111') des dem fehlerhaften Statorwicklungssystem (121, 121') zugeordneten Rotors (110, 110') herbeigeführt wird.

12. Verfahren nach Anspruch 11, **dadurch gekennzeichnet, dass** zur Entmagnetisierung nach dem Herbeiführen der Überhitzung ein dem ursprünglichen Magnetfeld des magnetischen Mittels (111, 111') des dem fehlerhaften Statorwicklungssystem (121, 121') zugeordneten Rotors (110, 110') entgegen gerichtetes magnetisches Gegenfeld aufgebaut wird.

## Claims

1. Electric machine (100) which has a winding system group comprising at least two stator winding systems (121, 121') and a rotor arrangement with at least two rotors (110, 110'),
wherein
- each rotor (110, 110') of the rotor arrangement comprises at least one permanent magnet (111, 111') as a magnetic means,
- each rotor (110, 110') of the rotor arrangement is assigned to a stator winding system (121, 121') of the winding system group and is rotatable relative to the stator winding system (121, 121') assigned thereto,
- each stator winding system (121, 121') of the winding system group and the rotor (110, 110'), assigned to the respective stator winding system (121, 121'), of the rotor arrangement are designed in such a way, and arranged so as to form a respective air gap (113, 113') between one another, that they can interact electromagnetically with one another,
**characterized in that**
- the electric machine (100) has a demagnetization device (300) with which, in the event of a fault in a faulty stator winding system (121, 121') of the winding system group, a targeted demagnetization of the magnetic means (111, 111') of the rotor (110, 110') assigned to the faulty stator winding system (121, 121') can be carried out,
wherein
the demagnetization device (300) has a heating apparatus (320), wherein
- the heating apparatus (320) for each rotor (110, 110') of the rotor arrangement has a heating-up device (321, 322) assigned to the respective rotor (110, 110'), wherein each heating-up device (321, 322) is separately activatable and deactivatable and set up and arranged in order, after activation, to separately heat up only that rotor (110, 110'), and in particular the magnetic means (111, 111') thereof, to which the activated heating-up device (321, 322) is assigned,
- the demagnetization device (300) is set up in order, if necessary, in particular in the event of a fault, and in a targeted manner, to be able to activate each heating-up device (321, 322) separately,
wherein
the heating apparatus (320) comprises a configurable fluid connection (323) to a heat source (500),
wherein
- heat can be conducted from the heat source (500) to the electric machine (100) via the fluid connection (323),
- the fluid connection (323) for each rotor (110, 110') of the rotor arrangement has a line (325, 326) assigned to the respective rotor (110, 110') for guiding the heat from the heat source (500) to the respective rotor (110, 110'), wherein the respective line (325, 326) is part of the heating-up device (321, 322) assigned to the respective rotor (110, 110'),
- the demagnetization device (300) is set up to configure the fluid connection (323) in such a way that the heat is guided only to that rotor (110, 110') which is assigned to the faulty stator winding system (121, 121').

2. Electric machine (100) according to Claim 1, **characterized in that** a rotor cooling arrangement (140) is provided for cooling the rotor arrangement, wherein
- the rotor cooling arrangement (140) for each rotor (110, 110') of the rotor arrangement has a cooling system (141, 142) assigned to the respective rotor (110, 110'), wherein each cooling system (141, 142) is separately activatable and deactivatable and set up and arranged in order, after activation, to separately cool only that rotor (110, 110'), and in particular the magnetic means (111, 111') thereof, to which it is assigned,
- the demagnetization device (300) is set up in order, if necessary, in particular in the event of a fault, and in a targeted manner, to be able to deactivate each cooling system (141, 142) separately, wherein, after deactivation of a respective cooling system (141, 142), that rotor (110, 110'), to which the deactivated cooling system (141, 142) is assigned, and in particular the magnetic means (111, 111') thereof, is not cooled further.

3. Electric machine (100) according to either of Claims 1 and 2, **characterized in that** the demagnetization device (300) is set up to supply an alternating current with a specifically impressed harmonic component to the faulty stator winding system (121, 121') when the fault occurs.

4. Electric machine (100) according to Claim 3, **characterized in that** a power electronics module (220) is provided which, for each stator winding system (121, 121'), comprises a power electronics unit (221, 222) assigned to the respective stator winding system (121, 121'), wherein
- each power electronics unit (221, 222) is set up in order to provide and to supply to the stator winding system (121, 121') to which it is assigned, an alternating current suitable for operating the respective stator winding system (121, 121'), during normal operation of the respective stator winding system (121, 121'),
- the demagnetization device (300) is set up to operate the power electronics module (220) in such a way that, when the fault occurs, the power electronics unit (221, 222) assigned to the faulty stator winding system (121, 121') impresses the harmonic component in a targeted manner on the alternating current to be supplied to the faulty stator winding system (121, 121').

5. Electric machine (100) according to one of Claims 1 to 4, **characterized in that** an apparatus (310) is provided for generating opposing magnetic fields, wherein
- the apparatus (310) for generating opposing magnetic fields for each rotor (110, 110') of the rotor arrangement has a unit (311, 312) assigned to the respective rotor (110, 110') for generating an opposing magnetic field, wherein each such unit (311, 312) is separately activatable and arranged and designed to generate an opposing magnetic field after activation by feeding an electric current into the faulty stator winding system (121, 121'), said opposing magnetic field substantially acting on the rotor (110, 110') assigned to the unit (311, 312) and demagnetizing the magnetic means (111, 111') thereof in the process,
- the demagnetization device (300) is set up to operate the apparatus (310) for generating opposing magnetic fields in such a way that, when the fault occurs, the unit (311, 312) assigned to the faulty stator winding system (121, 121') can be activated in a targeted manner in order to generate a respective opposing magnetic field.

6. Electric machine according to one of Claims 1 to 4, **characterized in that** an apparatus (310) for generating opposing magnetic fields is provided, wherein
- the apparatus (310) is a short-circuiting apparatus (310) with which at least one phase (122a, 122b, 122c, 122a', 122b', 122c') of the faulty stator winding system (121, 121') can be short-circuited,
- the demagnetization device (300) is set up to operate the short-circuiting apparatus (310) in such a way that, when the fault occurs, at least one phase (122a, 122b, 122c, 122a', 122b', 122c') of the faulty stator winding system (121, 121') is short-circuited.

7. Electric machine according to one of the preceding claims, **characterized in that**
- the heat source (500) comprises an internal combustion engine, in particular a turbine, and
- the heat supplied to the rotor (110, 110') assigned to the faulty stator winding system (121, 121') comprises waste heat from the internal combustion engine (500), in particular bleed air.

8. Electric machine (100) according to one of the preceding claims, **characterized in that** each line (325, 326) is arranged and designed in such a way that the heat supplied via the respective line (325, 326) is conducted into the air gap (113, 113') of that rotor (110, 110') to which the line (325, 326) is assigned.

9. Electric machine (100) according to one of the preceding claims, **characterized in that** each heating-up device (321, 322) has at least one electric heating element (321, 322) which can be activated by the demagnetization device (300) for heating up that rotor (110, 110') to which the respective heating-up device (321, 322) is assigned, wherein the demagnetization device (300) is set up in order, when required, in particular in the event of a fault, and in a targeted manner, to be able to activate each electric heating element (321, 322) separately, wherein, after activation of a respective electric heating element (321, 322), only that rotor (110, 110') to which the activated electric heating element (321, 322) is assigned, and in particular the magnetic means (111, 111') thereof, is heated up.

10. Method for operating an electric machine (100) according to one of Claims 1 to 9, **characterized in that**, when the fault occurs in the faulty stator winding system (121, 121'), the demagnetization device (300) demagnetizes the magnetic means (111, 111') of the rotor (110, 110') assigned to the faulty stator winding system (121, 121').

11. Method according to Claim 10, **characterized in that**, for the demagnetization, overheating of the rotor (110, 110') assigned to the faulty stator winding system (121, 121') and in particular overheating of the magnetic means (111, 111') of the rotor (110, 110') assigned to the faulty stator winding system (121, 121') is brought about.

12. Method according to Claim 11, **characterized in that**, for the demagnetization, after the overheating has been brought about, an opposing magnetic field directed counter to the original magnetic field of the magnetic means (111, 111') of the rotor (110, 110') assigned to the faulty stator winding system (121, 121') is built up.

## Revendications

1. Machine électrique (100), laquelle comprend un groupe de systèmes d'enroulements comportant au moins deux systèmes d'enroulements de stator (121, 121') ainsi qu'un ensemble de rotors doté d'au moins deux rotors (110, 110'),
- chaque rotor (110, 110') de l'ensemble de rotors comportant au moins un aimant permanent (111, 111') comme moyen magnétique,
- chaque rotor (110, 110') de l'ensemble de rotors étant associé à un système d'enroulements de stator (121, 121') du groupe de systèmes d'enroulements et pouvant tourner par rapport au système d'enroulements de stator (121, 121') qui lui est associé,
- chaque système d'enroulements de stator (121, 121') du groupe de systèmes d'enroulements et le rotor (110, 110'), associé au système d'enroulements de stator (121, 121') respectif, de l'ensemble de rotors étant réalisés et disposés l'un par rapport à l'autre en formant un entrefer (113, 113') respectif entre eux, de telle sorte qu'ils peuvent interagir l'un avec l'autre de manière électromagnétique,
**caractérisée en ce que**
- la machine électrique (100) comprend un dispositif de démagnétisation (300) à l'aide duquel, en présence d'un cas de panne dans un système d'enroulements de stator (121, 121') défectueux du groupe de systèmes d'enroulements, une démagnétisation ciblée du moyen magnétique (111, 111') du rotor (110, 110') associé au système d'enroulements de stator (121, 121') défectueux peut être effectuée,
le dispositif de démagnétisation (300) comprenant un dispositif de chauffage (320),
- le dispositif de chauffage (320) pour chaque rotor (110, 110') de l'ensemble de rotors comprenant un dispositif d'échauffement (321, 322) associé au rotor (110, 110') respectif, chaque dispositif d'échauffement (321, 322) pouvant être activé et désactivé séparément et étant conçu et disposé pour, après l'activation, échauffer séparément seulement le rotor (110, 110') et en particulier son moyen magnétique (111, 111') auquel le dispositif d'échauffement (321, 322) activé est associé,
- le dispositif de démagnétisation (300) étant conçu pour, en cas de besoin, en particulier en cas de panne, pouvoir activer séparément de manière ciblée chaque dispositif d'échauffement (321, 322),
le dispositif de chauffage (320) comportant une liaison fluidique (323) pouvant être configurée vers une source de chaleur (500),
- de la chaleur pouvant être guidée de la source de chaleur (500) à la machine électrique (100) par le biais de la liaison fluidique (323),
- la liaison fluidique (323) pour chaque rotor (110, 110') de l'ensemble de rotors comprenant une conduite (325, 326) associée au rotor (110, 110') respectif pour le guidage de la chaleur de la source de chaleur (500) au rotor (110, 110') respectif, la conduite (325, 326) respective étant une partie du dispositif d'échauffement (321, 322) associé au rotor (110, 110') respectif,
- le dispositif de démagnétisation (300) étant conçu pour configurer la liaison fluidique (323) de telle sorte que la chaleur n'est guidée que vers le rotor (110, 110') qui est associé au système d'enroulements de stator (121, 121') défectueux.

2. Machine électrique (100) selon la revendication 1, **caractérisée en ce qu'**un refroidissement de rotor (140) pour le refroidissement de l'ensemble de rotors est prévu,
- le refroidissement de rotor (140) pour chaque rotor (110, 110') de l'ensemble de rotors comprenant un système de refroidissement (141, 142) associé au rotor (110, 110') respectif, chaque système de refroidissement (141, 142) pouvant être activé et désactivé séparément et étant conçu et disposé pour, après l'activation, refroidir séparément seulement le rotor (110, 110') et en particulier son moyen magnétique (111, 111') auquel il est associé,
- le dispositif de démagnétisation (300) étant conçu pour, en cas de besoin, en particulier en cas de panne, pouvoir désactiver séparément de manière ciblée chaque dispositif de refroidissement (141, 142), et après une désactivation d'un système de refroidissement (141, 142) respectif, le rotor (110, 110') qui est associé au système de refroidissement (141, 142) désactivé, et en particulier son moyen magnétique (111, 111'), n'étant plus refroidis davantage.

3. Machine électrique (100) selon l'une des revendications 1 et 2, **caractérisée en ce que** le dispositif de démagnétisation (300) est conçu pour, en présence du cas de panne, alimenter le système d'enroulements de stator (121, 121') défectueux en courant alternatif présentant une teneur en harmoniques imposée de manière ciblée.

4. Machine électrique (100) selon la revendication 3, **caractérisée en ce qu'**un module d'électronique de puissance (220) est prévu, lequel comporte pour chaque système d'enroulements de stator (121, 121') une unité d'électronique de puissance (221, 222) associée au système d'enroulements de stator (121, 121') respectif,
- chaque unité d'électronique de puissance (221, 222) étant conçue pour produire un courant alternatif approprié au fonctionnement du système d'enroulements de stator (121, 121') respectif et alimenter le système d'enroulements de stator (121, 121') auquel elle est associée en ce courant alternatif en fonctionnement normal du système d'enroulements de stator (121, 121') respectif,
- le dispositif de démagnétisation (300) étant conçu pour faire fonctionner le module d'électronique de puissance (220) de telle sorte qu'en présence du cas de panne, l'unité d'électronique de puissance (221, 222) associée au système d'enroulements de stator (121, 121') défectueux impose de manière ciblée la teneur en harmoniques au courant alternatif devant alimenter le système d'enroulements de stator (121, 121') défectueux.

5. Machine électrique (100) selon l'une des revendications 1 à 4, **caractérisée en ce qu'**un dispositif (310) de génération de champs magnétiques inverses est prévu,
- le dispositif (310) de génération de champs magnétiques inverses comprenant, pour chaque rotor (110, 110') de l'ensemble de rotors, une unité (311, 312) associée au rotor (110, 110') respectif pour la génération d'un champ magnétique inverse, chaque unité (311, 312) de ce type pouvant être activée séparément et étant disposée et réalisée pour générer un champ magnétique inverse après l'activation par injection d'un courant électrique dans le système d'enroulements de stator (121, 121') défectueux, lequel champs magnétique inverse agit substantiellement sur le rotor (110, 110') associé à l'unité (311, 312) et en l'occurrence démagnétise son moyen magnétique (111, 111'),
- le dispositif de démagnétisation (300) étant conçu pour faire fonctionner le dispositif (310) de génération de champs magnétiques inverses de telle sorte qu'en présence du cas de panne, l'unité (311, 312) associée au système d'enroulements de stator (121, 121') défectueux pour la génération d'un champ magnétique inverse respectif peut être activée de manière ciblée.

6. Machine électrique selon l'une des revendications 1 à 4, **caractérisée en ce qu'**un dispositif (310) de génération de champs magnétiques inverses est prévu,
- le dispositif (310) étant un dispositif de court-circuitage (310), à l'aide duquel au moins une phase (122a, 122b, 122c, 122a', 122b', 122c') du système d'enroulements de stator (121, 121') défectueux peut être court-circuitée,
- le dispositif de démagnétisation (300) étant conçu pour faire fonctionner le dispositif de court-circuitage (310) de telle sorte qu'en présence du cas de panne, au moins une phase (122a, 122b, 122c, 122a', 122b', 122c') du système d'enroulements de stator (121, 121') défectueux est court-circuitée.

7. Machine électrique selon l'une des revendications précédentes, **caractérisée en ce que**
- la source de chaleur (500) comporte un moteur à combustion interne, en particulier une turbine, et
- la chaleur acheminée au rotor (110, 110') associé au système d'enroulements de stator (121, 121') défectueux comporte une chaleur perdue du moteur à combustion interne (500), en particulier de l'air de prélèvement.

8. Machine électrique (100) selon l'une des revendications précédentes, **caractérisée en ce que** chaque conduite (325, 326) est disposée et réalisée de telle sorte que la chaleur acheminée par le biais de la conduite (325, 326) respective est guidée dans l'entrefer (113, 113') du rotor (110, 110') auquel la conduite (325, 326) est associée.

9. Machine électrique (100) selon l'une des revendications précédentes, **caractérisée en ce que** chaque dispositif d'échauffement (321, 322) comprend au moins un élément chauffant électrique (321, 322) pouvant être activé par le dispositif de démagnétisation (300) pour l'échauffement du rotor (110, 110') qui est associé au dispositif d'échauffement (321, 322) respectif, le dispositif de démagnétisation (300) étant conçu pour, en cas de besoin, en particulier en cas de panne, pouvoir activer séparément de manière ciblée chaque élément chauffant électrique (321, 322), et après une activation d'un élément chauffant électrique (321, 322) respectif, seulement le rotor (110, 110') qui est associé à l'élément chauffant électrique (321, 322) activé, et en particulier son moyen magnétique (111, 111'), étant échauffé.

10. Procédé de fonctionnement d'une machine électrique (100) selon l'une des revendications 1 à 9, **caractérisé en ce qu'**en présence du cas de panne dans le système d'enroulements de stator (121, 121') défectueux, le dispositif de démagnétisation (300) effectue une démagnétisation du moyen magnétique (111, 111') du rotor (110, 110') associé au système d'enroulements de stator (121, 121') défectueux.

11. Procédé selon la revendication 10, **caractérisé en ce que** pour la démagnétisation, un surchauffage du rotor (110, 110') associé au système d'enroulements de stator (121, 121') défectueux et en particulier un surchauffage du moyen magnétique (111, 111') du rotor (110, 110') associé au système d'enroulements de stator (121, 121') défectueux sont provoqués.

12. Procédé selon la revendication 11, **caractérisé en ce que** pour la démagnétisation, après que le surchauffage a été provoqué, un champ magnétique inverse orienté en sens inverse du champ magnétique initial du moyen magnétique (111, 111') du rotor (110, 110') associé au système d'enroulements de stator (121, 121') défectueux est créé.
